# EUROPÄISCHE PATENTSCHRIFT

(11) **EP 0 855 099 B1**
(45) Veröffentlichungstag und Bekanntmachung des Hinweises auf die Patenterteilung: **12.05.1999**
(21) Anmeldenummer: 96933253.5
(22) Anmeldetag: 08.10.1996
(51) Int. Cl.: H02K 1/30, H02K 1/28

(54) **ROTOR FÜR EINE ROTIERENDE ELEKTRISCHE MASCHINE**
ROTOR FOR A ROTATING ELECTRICAL MACHINE
ROTOR POUR MACHINE ELECTRIQUE TOURNANTE

(30) Priorität: 09.10.1995 AT 1670/95; 19.09.1996 AT 1659/96
(43) Veröffentlichungstag der Anmeldung: 29.07.1998
(73) Patentinhaber: ELIN ENERGIEVERSORGUNG GESELLSCHAFT m.b.H., 1141 Wien (AT)
(72) Erfinder: SCHEIDL, Walter, A-8160 Weiz (AT)
(74) Vertreter: Rieberer, Stefan, Dipl.-Ing.
(86) Internationale Anmeldenummer: AT9600187
(87) Internationale Veröffentlichungsnummer: WO9714207

(56) Entgegenhaltungen:
- EP-A- 0 439 739
- EP-A- 0 463 895
- DE-A- 1 763 591
- DE-A- 2 459 235
- DE-C- 896 388
- FR-A- 2 441 088
- US-A- 4 128 780
- PATENT ABSTRACTS OF JAPAN vol. 011, no. 122 (E-500), 16.April 1987 & JP 61 269625 A (MITSUBISHI ELECTRIC CORP), 29.November 1986,

## Beschreibung

Die Erfindung betrifft einen Rotor für eine rotierende elektrische Maschine, insbesondere für eine Schenkelpolmaschine bzw.für einen Trommelläufer mit verteilter Erregerwicklung, wobei der Jochring aus einzelnen geschichteten Blechen besteht und über in Drehrichtung voreilende Stege an der Rotornabe befestigt ist.

Es sind prinzipiell für derartige Maschinen zwei Läufertypen bekannt.

Der erste Läufertyp ist der normale geschweißte Läufer, bei dem auf eine Scheibe der Jochring aufgeschweißt ist. Die Scheibe kann für den Kühlluftdurchtritt Ausnehmungen und/oder Versteifungsrippen aufweisen. Auf dem Jochring werden die Pole befestigt. Diese Befestigung kann über Schwalbenschwanz- oder Hammerkopf-Befestigung erfolgen. Auch aufgeschraubte Pole können Verwendung finden.

Dieser Läufertyp wird nur eingesetzt bzw. ist wirtschaftlich von Vorteil, wenn nur ein geringeres Schwungmoment erforderlich ist. Das geringe Schwungmoment ist gleichbedeutend mit einer geringen Jochringstärke.

Der zweite bekannte Läufertyp ist der sogenannte Blechkettenläufer. Bei diesem Läufertyp ist der Rotorarmstern sehr kompliziert und massiv ausgeführt. Üblicherweise wird die Blechkette auf den Armstern aufgeschrumpft. Diese Aufschrumpfung erfolgt insbesondere bei horizontalachsigen Maschinen.

Bei vertikalachsigen Maschinen kann auf die Schrumpfung der Blechkette gegebenenfalls verzichtet werden und nur eine zentrische Führung über die Armsterne erfolgen.

Diese Art des Rotors wird vorzugsweise bei hohen Schwungmomenten als die wirtschaftliche Lösung verwendet. Nachteilig bei diesem Läufertyp ist aber immer die schwere Konstruktion des Armsternes.

Darüber hinaus ist aus der DE 47 072 C ein eingangs beschriebener Rotor bekannt, der einen Jochring aus einzelnen geschichteten Blechen aufweist, die beidseitig auf einer Rotornabe angeordnet sind. Die Rotornabe ist ihrerseits auf der Rotorwelle angeordnet und die geschichteten Bleche werden mittels Spannbolzen. die durch die Rotornabe laufen, zusammengespannt. Bei dieser Konstruktion ist es nachteilig, daß hohe radiale Zug- und Druckkräfte auftreten.

Weiters ist aus der DE 24 59 235 A ein Trommelläufer mit am Umfang verteilter Wicklung, sowie Stege zwischen der Rotorwelle und dem geschichteten Jochenring bekannt. Durch die Anschlußstücke der Stege ist ein aufwendiger Aufbau gegeben.

Aus der DE 896 388 C ist ein Trommelläufer mit verteilten Nuten in einem geschichteten Jochring für eine verteilte Erregerwicklung bekannt. Bei dieser Konstruktion sind zwischen den Armanschlußstücken magnetische Unterbrechungen.

In der US 4 128 780 A ist ein Rotor einer drehenden elektrischen Maschine beschrieben, der den Jochring mittels Doppelstege an der Rotorwelle befestigt. Ebenso ist aus der FR 2 441 088 A ein energiespeichemdes Schwungrad bekannt, das über bewegliche Stege mit der Rotorwelle verbunden ist. Durch die Vielteiligkeit der Konstruktionen ist ein großer Aufwand erforderlich.

Die EP-A-0 463 895 offenbart einen Rotor entsprechend dem Oberbegriff des Anspruchs 1.

Aufgabe der Erfindung ist es, einerseits die obigen Nachteile zu vermeiden und anderseits eine noch bessere wirtschaftliche Lösung für hohe Schwungmomente für insbesondere horizontalachsige Maschinen zu erzielen.

Die Aufgabe wird durch die Erfindung gelöst. Der erfindungsgemäße Rotor ist dadurch gekennzeichnet, daß der Jochring über in Drehrichtung voreilende Stege an der Rotornabe befestigt ist, daß die Rotornabe und die Stege einstückig als Scheibe ausgebildet sind, und daß die Scheibe Ausnehmungen aufweist, wodurch sich in Drehrichtung die an sich bekannten voreilenden Stege ergeben.

Mit der Erfindung ist es erstmals möglich, die Vorteile der beiden bekannten Läufertypen zu vereinen. Einerseits wird die komplizierte Armsternkonstruktion vermieden und durch eine gegebenenfalls brenngeschnittene, billige Scheibe ersetzt, anderseits sind die Vorteile der für hohe Schwungmomente geeigneten Blechkette gegeben. So sind auch die Einzelbleche leichter herzustellen und auch leichter zu transportieren. Darüber hinaus hat die Blechkettenkonstruktion eine höhere Festigkeit. Die Scheibe übemimmt die zentrische Führung des geschichteten Jochringes.

Die Erfindung kann auch bei horizontal - wie auch vertikalachsigen Maschinen eingesetzt werden. Ebenso können die Pole beim erfindungsgemäßen Rotor über Schwalbenschwanz- oder Hammerkopf-Befestigungen angebracht werden.

Der gravierende Vorteil der Erfindung ist darin zu sehen, daß die Scheibe Bestandteil der Blechkette ist. Durch die Ankopplung der Blechkette an die Scheibe sind keine radialen Zug- oder Druckkräfte gegeben, sondern es treten Scherkräfte aus den Haftreibungskräften auf, die eine Relativbewegung zwischen Scheibe und Blechkette vermeiden.

Durch die Integration der Scheibe in die Blechkette, insbesondere bis zum Außenrand der Blechkette, ist ein axial lückenloser magnetischer Kreis gegeben. Darüber hinaus ist die Scheibe am Außenrand radial relativ weich und weist dadurch in etwa die gleiche Steifigkeit wie die Blechkette auf. Dadurch ist aber bei einer radialen Aufweitung aus Fliehkräften bzw. Temperaturerhöhung praktisch keine Relativbewegung zwischen Scheibe und Blechkette möglich. Durch die variantenreichen Möglichkeiten der Gestaltung der Ausnehmungen können sehr dünne Stege erzielt werden. Die unterschiedlichen Aufweitungen der Scheibe und der Blechkette werden minimiert.

Nach einem weiteren Merkmal der Erfindung sind die geschichteten Bleche über Spannbolzen, die auch durch die Scheibe verlaufen, zusammengespannt. Dadurch wird eine noch höhere Kontinuität des magnetischen Kreises im Jochring erreicht.

Die radiale Belastung der Blechkette ist durch die Eigenfliehkraft sowie durch die Fliehkraft der Pole und die im Betrieb gegebene Erwärmung gegeben. Auch die Scheibe geht im Betrieb durch die Fliehkraft auf, jedoch nicht im gleichen Ausmaß wie die geschichteten Bleche.

Um nun das Ziel zu erreichen, nämlich daß die Scheibe eine gleiche radiale Aufweitung wie die geschichteten Bleche aufweist, werden durch Ausnehmungen in der Scheibe von innen nach außen in Drehrichtung voreilende Stege geschaffen. Durch die Krümmung dieser Arme bzw. Stege wird im Betrieb eine der Blechkette angepaßte Aufweitung erreicht. Wie ja allgemein bekannt, wirkt das mechanische Moment in Drehrichtung und das elektrische Moment entgegen der Drehrichtung. Um nun die Erweiterung des Außenumfanges der Scheibe zu erreichen, wird die Drehmomentenübertragung ausgenützt, da sich die voreilenden Stege mehr oder weniger verbiegen. Im Nennbetrieb kann das Ziel der gleichen Aufweitung erreicht werden. Mit der Arm- oder Stegstärke wird die Torsionssteifigkeit und damit die Aufweitung unter Drehmomentübertragung definiert.

Die Blechkettenstärke wird aus dem Schwungmoment definiert. Rechnerisch wird dann die radiale Aufweitung der geschichteten Bleche ermittelt. Über eine Finite-Elemente-Rechnung kann dann die Konstruktion bzw. die Abmessungen der Scheibe bestimmt werden.

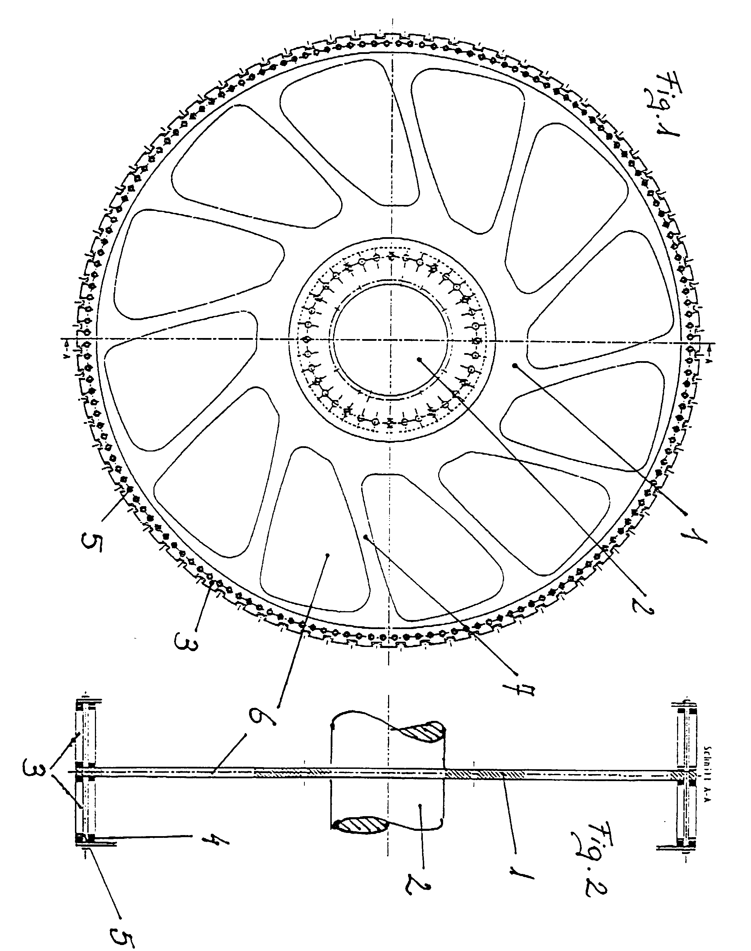

Anhand eines in der Zeichnung dargestellten Ausführungsbeispieles wird die Erfindung näher erläutert. Die Fig. 1 zeigt den Rotor mit seinen Ausnehmungen und die Fig. 2 einen Schnitt durch die Fig. 1 mit den geschichteten Blechen.

Gemäß der Fig 1 und 2 ist die Scheibe 1 auf der Rotorwelle 2 angeordnet. Der die - nicht dargestellten - Pole tragende Jochring 3 besteht aus einzeln geschichteten Blechen 4. Diese segmentierten Bleche 4 werden überlappend geschichtet und beidseitig auf der Scheibe 1 vorgesehen. Diese geschichteten Bleche 4 werden mit einem Spannbolzen 5, der auch durch die Scheibe geführt ist, zusammengespannt.

Die Scheibe 1 ist einstückig ausgebildet, wodurch eine große Homogenität durch das Material von der Rotorwelle 2 bis zum Außenrand der Blechkette erreicht wird. Diese Homogenität und die Erstreckung der Scheibe 1 bis zum Außenrand der geschichteten Bleche 4 bringt einen axial lückenlos geschlossenen magnetischen Kreis mit sich.

Die Scheibe 1 weist Ausnehmungen 6 auf. Die Form dieser Ausnehmungen wird so gewählt, daß in Drehrichtung gesehen von innen nach außen voreilende Stege 7 gebildet werden.
Um eine annähemd gleiche Aufweitung der Scheibe 1, wie die geschichteten Bleche 4 des Jochringes 3 aufweisen, zu erreichen, verformen sich im Betrieb der Maschine diese Stege 7. Die Verformung erfolgt in entgegengesetzter Richtung zur Drehrichtung. Es kommt also zu einer größeren Aufweitung als bei einer Vollscheibe bzw bei geraden radialen Stegen.

## Patentansprüche

1. Rotor für eine rotierende elektrische Maschine, insbesondere für eine Schenkelpolmaschine bzw. für einenTrommelläufer mit verteilter Erregerwicklung, wobei der Jochring (3) aus einzelnen geschichteten Blechen (4) besteht, die geschichteten Bleche (4) beidseitig auf einer Scheibe (1) angeordnet sind, die Scheibe (1) bis an den Außenrand der geschichteten Bleche (4) reicht und mit diesen den Jochring (3) bildet, dadurch gekennzeichnet, daß der Jochring (3) über in Drehrichtung voreilende Stege (7) an der Rotornabe befestigt ist, daß die Rotornabe und die Stege (7) einstückig als Scheibe (1) ausgebildet sind, und daß die Scheibe (1) Ausnehmungen (6) aufweist, wodurch sich in Drehrichtung die an sich bekannten voreilenden Stege (7) ergeben.

2. Rotor nach Anspruch 1, dadurch gekennzeichnet, daß die geschichteten Bleche (4) über Spannbolzen (5), die auch durch die Scheibe (1) verlaufen, zusammengespannt sind.

## Claims

1. A rotor for a rotating electrical machine, particularly for a salient-pole machine or a drum rotor having a distributed exciting winding, the yoke ring (3) consisting of individual laminated sheets (4), the laminated sheets (4) being arranged on both sides of a disk (1), the disk (1) reaching up to the outer edge of the laminated sheets (4), thus forming the yoke ring (3) together with them, characterised in that the yoke ring (3) is fastened to the rotor hub by straps (7) leading in the direction of rotation, that the rotor hub and the straps (7) are integraly formed as a disk (1), and that the disk (1) includes recesses (6) by which the straps (7) are obtained leading in the direction of rotation as known *per se.*

2. Rotor according to claim 1, characterised in that the laminated sheets (4) are clamped together by clamp bolts (5) which extend through the disk (1) too.

## Revendications

1. Rotor pour une machine électrique tournante, en particulier pour une machine à pôles saillants, respectivement pur un rotor de tambour équipé d'un enroulement excitateur réparti, l'anneau de culasse (3) étant constitué de tôles revêtues (4) individuelles, les tôles revêtues (4) étant disposées de part et d'autre sur un disque (1), le disque (1) allant jusqu'à la bordure extérieure des tôles revêtues (4) et constituant avec celles-ci l'anneau de culasse (3), caractérisé en ce que l'anneau de culasse (3) est fixé au moyeu de rotor par l'intermédiaire de nervures (7) placées à l'avant dans le sens de la rotation, en ce que le moyeu de rotor et les nervures (7) sont réalisés d'une seule pièce sous la forme de disque (1), et en ce que le disque (1) présente des évidements (6) faisant qu'en résultent les nervures (7) placées à l'avant dans le sens de rotation, connues en soi.

2. Rotor selon la revendication 1, caractérisé en ce que les tôles revêtues (4) sont serrées ensemble par l'intermédiaire de boulons de serrage (5) s'étendant également à travers le disque (1).
